Europäisches Patentamt

European Patent Office

Office européen des brevets

(11) Veröffentlichungsnummer: **0 255 508**
**A2**

(12) # EUROPÄISCHE PATENTANMELDUNG

(21) Anmeldenummer: 87890169.3

(22) Anmeldetag: **13.07.87**

(51) Int. Cl.⁴: **G 02 C 5/22**

(30) Priorität: **28.07.86 AT 2022/86**

(43) Veröffentlichungstag der Anmeldung:
**03.02.88 Patentblatt 88/05**

(84) Benannte Vertragsstaaten:
**CH DE ES FR IT LI**

(71) Anmelder: **Redtenbacher Werke Präzisionsteile GmbH
A-4644 Scharnstein 39 (AT)**

(72) Erfinder: **Schaufler, Hans, Dipl.-Ing.
Rappersdorf 26
A-4621 Sipbachzell (AT)**

(74) Vertreter: **Hübscher, Heiner, Dipl.-Ing. et al
Spittelwiese 7
A-4020 Linz (AT)**

(54) **Brillenscharnier.**

(57) Um bei einem Brillenscharnier eine vorteilhafte Gangregulierung zu erhalten, weist die Scharnierachse (5) in einem sich wenigstens über zwei Scharnierlappen (2, 3) erstreckenden Längenbereich eine kegelförmige Gestalt auf und greift in die zumindest in diesem Längenbereich gegengleich kegelförmige Scharnierbohrung (6) formschlüssig ein.

FIG. 1

Bundesdruckerei Berlin

**Beschreibung**

Brillenscharnier

Die Erfindung bezieht sich auf ein Brillenscharnier, bestehend aus zwei Scharnierteilen, deren übereinandergreifende Scharnierlappen ene fluchtende Scharnierbohrung zur Aufnahme einer Scharnierachse aufweisen, die in einem sich wenigstens über je einen Scharnierlappen der beiden Scharnierteile erstreckenden Längenbereich kegelförmig ausgebildet ist.

Bei bekannten Brillenscharnieren mit einer in eine fluchtende Scharnierbohrung der übereinandergreifenden Scharnierlappen zweier Scharnierteile eingreifenden Scharnierachse ergeben sich Schwierigkeiten hinsichtlich der Gangregulierung, weil für die Gängigkeit des Scharnieres lediglich die Reibkräfte zwischen den aneinanderliegenden Scharnierlappen der beiden Scharnierteile ausgenützt werden können und diese Reibungskräfte von Fertigungstoleranzen abhängen. Dazu kommt noch, daß mit einem Spiel zwischen der zylindrischen Scharnierachse und der Scharnierbohrung gerechnet werden muß, insbesondere nach einem gebrauchsbedingten Verschleiß. Solche Brillenscharniere können folglich keine genaue Führung des Brillenbügels sicherstellen.

Bei Brillenscharnieren ist es außerdem bekannt (US-A-4 145 124), die Scharnierachse in einem sich über mehrere Scharnierlappen erstreckenden Längenbereich kegelförmig auszubilden und diesen kegelförmigen Achsenbereich mit Längsrillen zu versehen, um über diesen gerillten Bereich eine Drehsicherung für die die Scharnierachse bildende Schraube gegenüber dem einen Scharnierteil zu erhalten. Die Scharnierbohrung in den Scharnierlappen des anderen Scharnierteiles muß in diesem Fall den kegelförmigen Bereich der Scharnierachse mit Spiel umgeben, damit die Schwenkbarkeit des Brillenscharnieres gewährleistet werden kann. Bezüglich der Gängigkeit des Brillenscharnieres bleiben jedoch die Reibungskräfte zwischen den axial aneinanderliegenden Scharnierlappen der beiden Scharnierteile maßgebend.

Zum Spielausgleich der Scharnierachse in der Scharnierbohrung ist es bekannt (DE-B-1 196 397), eine elastische Hülse aus Kunststoff in die Scharnierbohrung einzusetzen, die axial vorgespannt wird und sich aufgrund dieser axialen Vorspannung an die Bohrungswandungen anlegt, zumal zwischen einem Scharnierlappen und der Scharnierachse ein konischer Ringspalt vorhanden ist. Nachteilig bei dieser bekannten Konstruktion ist vor allem, daß eine zusätzliche Hülse aus elastischem Werkstoff vorgesehen werden muß und daß sich zufolge einer über den axialen Erstreckungsbereich der Hülse ungleichmäßigen Ringspaltweite unterschiedliche Reibungsbedingungen im Bereich der einzelnen Scharnierlappen ergeben. Die Gängigkeit des Brillenscharnieres wird aber durch die Reibungsverhältnisse zwischen der elastischen Hülse und den Scharnierlappen mitbestimmt.

Schließlich ist es bekannt (US-A-618 118), eine über einen kegelförmigen Ansatz in einem Scharnierlappen gehaltene Scharnierachse, die sich mit einem zylindrischen Teil durch die anderen Scharnierlappen erstreckt, mit ihrem zylindrischen Teil in eine geschlitzte konische Hülse aus Federstahl eingreifen zu lassen, die in einem Endbereich am zylindrischen Teil der Scharnierachse, im anderen Endbereich jedoch am mittleren Scharnierlappen federnd anliegt. Diese geschlitzte Federhülse, die in eine sich über je einen Scharnierlappen der beiden Scharnierteile erstreckende konische Bohrung eingesetzt ist, dient somit zum Ausgleich eines Lagerspieles für den mittleren Scharnierlappen und hat kaum einen Einfluß auf die Gängigkeit des Brillenscharnieres.

Der Erfindung liegt somit die Aufgabe zugrunde, die Mängel der bekannten Brillenscharniere zu vermeiden und ein Brillenscharnier der eingangs geschilderten Art mit einfachen Mitteln so zu verbessern, daß nicht nur eine gewünschte Gängigkeit über eine größere Gebrauchsdauer hinweg eingehalten, sondern auch eine spielfreie Führung des über das Scharnier angelenkten Brillenbügels gewährleistet werden kann, ohne eine zusätzliche elastische Hülse vorsehen zu müssen.

Die Erfindung löst die gestellte Aufgabe dadurch, daß die Scharnierachse mit ihrem kegelförmigen, eine Gleitfläche bildenden Längenbereich in die zumindest in einer diesem Längenbereich entsprechenden, sich über beide Scharnierteile erstreckenden Länge gegengleich kegelförmig ausgeführte Scharnierbohrung formschlüssig eingreift.

Durch das Zusammenwirken eines zumindest über zwei Scharnierlappen reichenden kegelförmigen Abschnittes der Scharnierachse und einer gegengleich kegelförmigen Scharnierbohrung wird zunächst eine spielfreie Aufnahme der Scharnierachse in der Scharnierbohrung erzielt, und zwar unter gleichzeitiger Zentrierung der beiden Scharnierteile, weil ja der kegelförmige Längenbereich und die kegelförmige Scharnierbohrung zumindest über zwei je einem Scharnierteil zugehörige Scharnierlappen reicht. Darüber hinaus ergibt sich zufolge des formschlüssig in die kegelförmige Scharnierbohrung eingreifenden Kegelabschnittes der Scharnierachse zwischen den beiden Scharnierteilen eine vergrößerte Gleitfläche, die unter dem Einfluß der möglichen Keilwirkung mit vergleichsweise geringen axialen Spannkräften eine erwünschte Reibung sicherstellt und damit das Einhalten einer vorteilhaften Gängigkeit des Brillenscharnieres auch über längere Zeitabschnitte erlaubt.

Bei Brillen, bei denen das Brillengestell nach dem Montieren des Brillenbügels einer galvanischen Behandlung unterworfen wird, ergibt sich darüber hinaus der Vorteil, daß über den formschlüssigen Eingriff der kegelförmigen Scharnierachse in die entsprechend kegelförmige Scharnierbohrung eine sichere, elektrisch leitende Verbindung zwischen dem Brillenbügel und der Bügelbacke bei dieser galvanischen Behandlung erzielt wird, so daß beispielsweise sonst notwendige Hilfsschrauben zur elektrisch leitenden Verbindung entfallen können.

Ist der Scharnierachse in weiterer Ausbildung der Erfindung auf der Seite des kleinsten Kegeldurchmessers ein am außen liegenden Scharnierlappen abgestützter, axialer Spanntrieb zugeordnet, so kann über den Spanntrieb eine bestimmte Gängigkeit des Brillenscharniers eingestellt und nachgestellt werden.

Eine Möglichkeit, einen einfachen Spanntrieb vorzusehen, besteht darin, den Spanntrieb aus einem mit der Scharnierachse verbundenen Schraubenbolzen und einer sich an dem außen liegenden Scharnierlappen abstützenden Spannmutter zu bilden. Wird die Spannmutter angezogen, so wird der kegelförmige Teil der Scharnierachse weiter in die kegelförmige Scharnierbohrung hineingezogen, wodurch die Reibungskräfte zwischen der Scharnierachse und den Scharnierlappen unter der auftretenden Keilwirkung entsprechend vergrößert werden, was ein schwergängigeres Scharnier zur Folge hat.

Soll ein stirnseitig aus dem Scharnier vorstehender Schraubenbolzen vermieden werden, so kann der Spanntrieb aus einer Spannschraube bestehen, die in eine Gewindebohrung der Scharnierachse eingreift. Die Wirkung eines solchen Spanntriebes bleibt allerdings gleich.

Um ein selbständiges Nachstellen des Spanntriebes zu erreichen, kann schließlich der Spanntrieb aus einer an der Scharnierachse angreifenden und am äußeren Scharnierlappen abgestützten Druckfeder bestehen. Durch die Federkraft dieser Druckfeder werden gleichbleibende Keilkräfte erzielt, was eine über eine längere Gebrauchsdauer gleichbleibende Gängigkeit des Scharniers nach sich zieht. Obwohl die Druckfeder unterschiedlich, beispielsweise als gummielastischer Druckkörper, ausgebildet sein kann, ergeben sich besondere Vorteile durch einen Federteller, der die gewünschten Federkräfte bei vergleichsweise geringen Federwegen sicherstellt. Außerdem ist bei solchen Federtellern die Einstellung der Vorspannung einfacher, wenn eine Gangregulierung mit unterschiedlichen Gängigkeiten des Scharnieres gefordert ist.

Wird die axiale Spannung der Scharnierachse über eine Schraube oder eine Mutter erreicht, so ist - wie auch bei zylindrischen Scharnierachsen - für eine Drehsicherung zu sorgen, damit sich der Spanntrieb für die Scharnierachse beim Verschwenken des Brillenbügels nicht lockern kann. Zu diesem Zweck kann zwischen der Scharnierachse und einem der außen liegenden Scharnierlappen eine Drehsicherung vorgesehen sein, so daß sich bei einem Verschwenken des Brillenbügels zwischen der Mutter bzw. der Schrauben und dem anliegenden Scharnierlappen keine Relativdrehung ergibt.

In der Zeichnung ist der Erfindungsgegenstand beispielsweise dargestellt. Es zeigen

Fig. 1 ein erfindungsgemäßes Brillenscharnier in einem Axialschnitt,

Fig. 2 eine der Fig. 1 entsprechende Darstellung einer Konstruktionsvariante des Brillenscharnieres,

Fig. 3 eine weitere Ausführungsform eines erfindungsgemäßen Brillenscharnieres ebenfalls im Axialschnitt und

Fig. 4 ein Brillenscharnier nach der Erfindung in einer zweilappigen Ausführung im Axialschnitt.

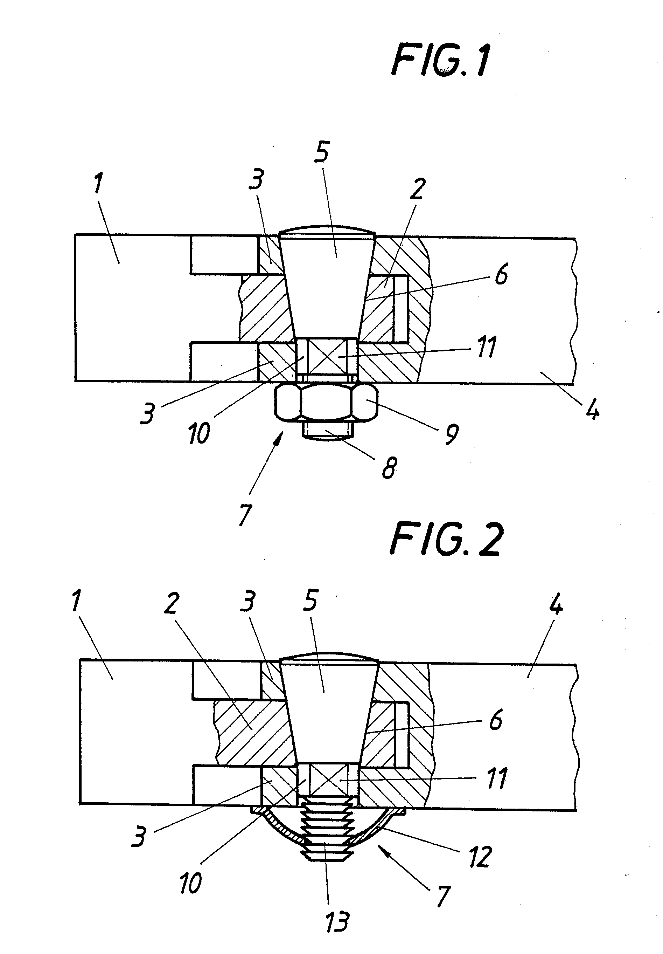

Das dargestellte Brillenscharnier gemäß der Ausführungsform nach Fig. 1 besteht aus einem beispielsweise dem Bügelbacken zugeordneten Scharnierteil 1 mit einem mittigen Scharnierlappen 2, der zwischen die beiden äußeren Scharnierlappen 3 des dem Bügel zugehörigen Scharnierteiles 4 ragt, und aus einer Scharnierachse 5, die in eine fluchtende Scharnierbohrung 6 in den Scharnierlappen 2 und 3 eingesetzt ist. Zum Unterschied von herkömmlichen Brillenscharnieren weist allerdings die Scharnierachse 5 in einem über zwei Scharnierlappen 2 und 3 reichenden Längenbereich eine kegelförmige Gestalt auf und greift mit diesem kegelförmigen Teil in die in diesem Bereich gegengleich kegelförmig ausgebildete Scharnierbohrung 6 formschlüssig ein. Dieser formschlüssige Eingriff wird durch einen axialen Spanntrieb 7 gesichert, der aus einem mit der Scharnierachse 5 verbundenen Schraubenbolzen 8 und einer Spannmutter 9 besteht, die sich auf der Seite des kleinsten Durchmessers des kegelförmigen Teiles der Scharnierachse 5 an dem außen liegenden Scharnierlappen 3 abstützt. Durch ein Anziehen der Spannmutter 9 wird somit der kegelförmige Teil der Scharnierachse 5 in den kegelförmigen Teil der Scharnierbohrung 6 hineingezogen, wodurch einerseits ein Spielausgleich erreicht wird und anderseits die Gängigkeit des Brillenscharnieres eingestellt werden kann, weil sich über die Kegelflächen eine zusätzliche Reibfläche ergibt, in deren Bereich sich zufolge der Keilwirkung über den Spanntrieb 7 bestimmte Reibkräfte einstellen lassen, die die Gängigkeit des Brillenscharnieres entscheidend bestimmen.

Um eine Drehsicherung für die Scharnierachse 5 zu erhalten, ist die Scharnierachse 5 in einem zylindrischen Bereich 10 mit einer beidseitigen Abflachung 11 versehen, die mit einem gegengleichen Querschnitt der Scharnierbohrung zusammenwirkt. An Stelle einer Abflachung könnte auch jeder andere von der Kreisform abweichende Querschnitt für eine solche Drehsicherung herangezogen werden.

Die Ausführungsform nach Fig. 2 unterscheidet sich von dem Brillenscharnier nach Fig. 1 lediglich durch den Spanntrieb 7, der durch eine als Federteile ausgebildete Druckfeder 12 gebildet wird, die sich an einem mit Stützrasten versehenen Bolzen 13 der Scharnierachse 5 abstützt. Zufolge der Federkraft des Spanntriebes 7 wird die Scharnierachse 5 unter gleichbleibender Zugkraft in die kegelförmige Scharnierbohrung 6 eingezogen, wobei die Vorspannung der Federkraft durch eine entsprechende Wahl der Abstützraste des Bolzens 13 bestimmt werden kann.

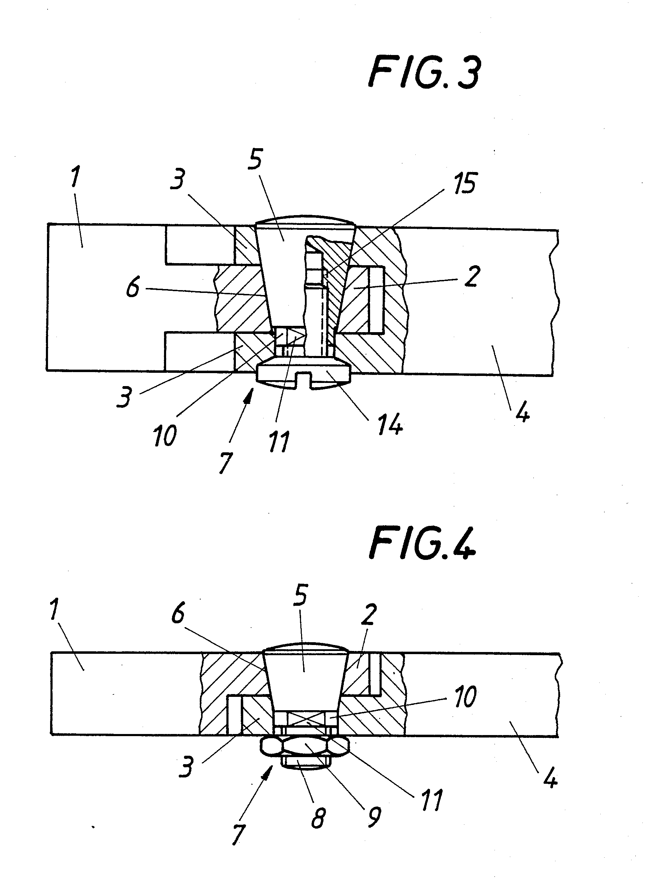

Nach Fig. 3 besteht der Spanntrieb 7 aus einer Spannschraube 14, die in eine Gewindebohrung 15 der Scharnierachse 5 eingreift, so daß wiederum die Scharnierachse 5 in die kegelförmige Scharnierbohrung 6 eingezogen werden kann. Wird bei einer solchen Ausführungsform der Kopf der Spannschraube 14 versenkt im Scharnierlappen 3 untergebracht, so ergibt sich eine besonders niedrige Bauhöhe, weil die Scharnierachse 5 stirnseitig kaum über die äußeren Scharnierlappen vorragt.

Schließlich zeigt die Fig. 4, daß die Erfindung nicht auf ein drei- oder mehrlappiges Scharnier beschränkt ist und selbst bei einem zweilappigen Scharnier eingesetzt werden kann. Die beiden Scharnierlappen 2 und 3 der Scharnierteile 1 und 4 werden durch die kegelförmige Scharnierachse 5 in einer gegengleich kegelförmigen Scharnierbohrung 6 durchsetzt, wobei sich der kegelförmige Abschnitt im Bereich beider Scharnierlappen 2 und 3 befinden muß, um die erfindungsgemäße Wirkung sicherzustellen. Die axiale Spannung der Scharnierachse 5 erfolgt wiederum mit einem Spanntrieb 7, der entsprechend der Fig. 1 aus einem Schraubenbolzen 8 und einer Spannmutter 9 besteht. Zur Drehsicherung wird ebenfalls eine Abflachung 11 in einem zylindrischen Teil 10 der Scharnierachse 5 vorgesehen. Es könnten aber auch die Spanntriebe gemäß den anderen Ausführungsbeispielen Verwendung finden.

## Patentansprüche

1. Brillenscharnier, bestehend aus zwei Scharnierteilen (1, 4), deren übereinandergreifende Scharnierlappen (3) eine fluchtende Scharnierbohrung (6) zur Aufnahme einer Scharnierachse (5) aufweisen, die in einem sich wenigstens über je einen Scharnierlappen (3) der beiden Scharnierteile (1, 4) erstreckenden Längenbereich kegelförmig ausgebildet ist, dadurch gekennzeichnet, daß die Scharnierachse (5) mit ihrem kegelförmigen, eine Gleitfläche bildenden Längenbereich in die zumindest in einer diesem Längenbereich entsprechenden, sich über beide Scharnierteile (1, 4) erstreckenden Länge gegengleich kegelförmig ausgeführte Scharnierbohrung (6) formschlüssig eingreift.

2. Brillenscharnier nach Anspruch 1, dadurch gekennzeichnet, daß der Scharnierachse (5) auf der Seite des kleinsten Kegeldurchmessers ein am außen liegenden Scharnierlappen (3) abgestützter, axialer Spanntrieb (7) zugeordnet ist.

3. Brillenscharnier nach Anspruch 2, dadurch gekennzeichnet, daß der Spanntrieb (7) aus einem mit der Scharnierachse (5) verbundenen Schraubenbolzen (8) und einer sich an dem außen liegenden Scharnierlappen (3) abstützenden Spannmutter (9) besteht.

4. Brillenscharnier nach Anspruch 2, dadurch gekennzeichnet, daß der Spanntrieb (7) aus einer Spannschraube (14) besteht, die in eine Gewindebohrung (15) der Scharnierachse (5) eingreift.

5. Brillenscharnier nach Anspruch 2, dadurch gekennzeichnet, daß der Spanntrieb (7) aus einer an der Scharnierachse (5) angreifenden und am äußeren Scharnierlappen (3) abgestützten Druckfeder (12) besteht.

6. Brillenscharnier nach Anspruch 5, dadurch gekennzeichnet, daß die Druckfeder (12) als Federteller ausgebildet ist.

7. Brillenscharnier nach Anspruch 5 oder 6, dadurch gekennzeichnet, daß die Vorspannung der Druckfeder (12) einstellbar ist.

8. Brillenscharnier nach einem der Ansprüche 1 bis 7, dadurch gekennzeichnet, daß zwischen der Scharnierachse (5) und einem der außen liegenden Scharnierlappen (3) eine Drehsicherung vorgesehen ist.

0255508

**FIG.1**

**FIG.2**

0255508

## FIG.3

## FIG.4